# EUROPÄISCHE PATENTSCHRIFT

(11) **EP 1 518 060 B1**
(45) Veröffentlichungstag und Bekanntmachung des Hinweises auf die Patenterteilung: **11.01.2006**
(21) Anmeldenummer: 03762518.3
(22) Anmeldetag: 26.06.2003
(51) Int. Cl.: F16D 23/04

(54) **HYDRAULISCH BETÄTIGBARE GETRIEBESCHALTUNG MIT EINER SYNCHRONISIEREINRICHTUNG**
HYDRAULICALLY ACTUATABLE GEARSHIFT SYSTEM COMPRISING A SYNCHRONIZING DEVICE
SYSTEME DE CHANGEMENT DE VITESSE A COMMANDE HYDRAULIQUE COMPRENANT UN DISPOSITIF DE SYNCHRONISATION

(30) Priorität: 02.07.2002 DE 10229513
(43) Veröffentlichungstag der Anmeldung: 30.03.2005
(73) Patentinhaber: ZF FRIEDRICHSHAFEN AG, 88038 Friedrichshafen (DE)
(72) Erfinder: REBHOLZ, Wolfgang, 88045 Friedrichshafen (DE)
(86) Internationale Anmeldenummer: PCT/EP2003/006735
(87) Internationale Veröffentlichungsnummer: WO 2004/005738

(56) Entgegenhaltungen:
- FR-A- 2 388 173
- US-A- 3 860 101
- US-A- 4 131 185
- US-A- 5 560 461

## Beschreibung

Die vorliegende Erfindung betrifft eine Getriebeschaltung mit einer Synchronisiereinrichtung für Losräder gemäß dem Oberbegriff des Patentanspruches 1. Eine derartige Getriebeschaltung ist z.B. aus US 3 860 101 bekannt.

Aus dem Stand der Technik sind Getriebeschaltungen für Losräder bekannt. Bei den bekannten Schaltungen sind zur Synchronisierung von Losrädern üblicherweise Synchronisiereinrichtungen vorgesehen, welche die Schiebemuffen mechanisch betätigen, um das gewünschte Losrad mit einer Welle zu synchronisieren. Auf diese Weise wird das notwendige Drehmoment von dem Losrad auf die Welle übertragen oder umgekehrt.

Üblicherweise wird als Schaltelement jeweils eine verschiebbare Schiebemuffe verwendet, die ein entsprechendes Profil besitzt, welches sich bei der Betätigung auf das Profil des Gegenstückes schiebt. Hierfür ist es erforderlich, dass die normalerweise anliegende Differenzdrehzahl zwischen dem Losrad und der Welle vorher den Wert Null annimmt. Anderenfalls ist es nicht möglich, die beiden Profile zu verbinden, ohne dass ein unerwünschtes Ratschen im Getriebe auftritt. Demzufolge sollen die beiden Profile erst dann miteinander in Kontakt treten, wenn die Drehzahlen zwischen dem zuschaltenden Losrad und der Welle ausgeglichen sind. Deshalb ist eine Sperrsynchronisierung vorgesehen, welche durch eine mechanische Sperreinrichtung das zu frühe Schalten verhindert.

Die Druckschrift DE 37 11 490 C2 offenbart eine Gangschalteinrichtung. Bei dieser Gangschalteinrichtung wird die Schiebemuffe von einer in der Getriebewelle aufgenommenen druckmittelbetriebenen Stelleinrichtung betätigt, welche aus einer hydraulisch beaufschlagbaren Stellkolbenanordnung besteht. Dabei wird ein die Schiebemuffe mit der Stellkolbenanordnung verbindender Verbindungsbolzen vorgesehen, der ein in der Getriebewelle quer angeordnetes Durchgangsloch mit axialem Spiel durchsetzt. Die bekannte Gangschalteinrichtung erfordert in nachteiliger Weise einen sehr komplexen Aufbau, da die Betätigungseinrichtung bzw. Stellkolbenanordnung in der Getriebewelle untergebracht ist. Dies beeinflusst die Fertigungskosten der bekannten Gangschalteinrichtung in negativer Weise.

Aus der Druckschrift GB 2 214 248 A ist ein Übersetzungsauswahl-Mechanismus für ein Fahrzeuggetriebe bekannt. Der Mechanismus verwendet fluidbetriebene Aktuatoren und eine elektrohydraulische Ansteuerung. Mit einem ersten Aktuator wird die gewünschte Übersetzung ausgewählt und mit einem zweiten Aktuator wird eine Bewegung in Richtung des Neutralweges ermöglicht, wobei der erste Aktuator durch eine Bewegung quer zum Neutralweg eine gewünschte Übersetzung aktiviert. Ferner sind Potentiometer vorgesehen, durch die die jeweiligen Positionen der Aktuatoren bestimmt werden und in Form von Signalen an ein Steuersystem weitergegeben werden.

Der vorliegenden Erfindung liegt die Aufgabe zugrunde, eine Getriebeschaltung der vorgenannten Gattung vorzuschlagen, welche eine möglichst einfach aufgebaute Synchronisiereinrichtung aufweist, mit der eine möglichst einfache und auch sichere Synchronisierung realisierbar ist.

Diese Aufgabe wird gemäß der Erfindung durch die Merkmale des Patentanspruches 1 gelöst. Weitere Varianten und Vorteile gehen aus den Unteransprüchen hervor.

Demnach wird eine erfindungsgemäße Getriebeschaltung mit einer Synchronisiereinrichtung vorgeschlagen, bei der eine Synchronisierung während des Schaltvorganges auf einfachste Weise ermöglicht wird. Insbesondere kann bei der erfindungsgemäßen Getriebeschaltung auf zusätzliche mechanische Teile einer Sperreinrichtung verzichtet werden. Durch die hydraulische Betätigung der Schiebemuffe und durch die Verbindung der Schiebemuffe mit der Welle über ein Nabenelement kann die Drehzahlangleichung des zu schaltenden Losrades und der Welle möglichst einfach realisiert werden. Dazu kann in Abhängigkeit des Betätigungsdruckes eine axiale Verschiebung der Schiebemuffe derart erfolgen, dass zunächst die vorhandene Drehzahldifferenz zwischen dem Losrad und der Welle ausgeglichen wird. Nach der erfolgten Drehzahlangleichung kann dann die Schiebemuffe derart axial verschoben werden, dass die Schiebemuffe mit dem zu schaltenden Losrad in Eingriff gebracht wird.

Im Rahmen einer vorteilhaften Weiterbildung der Erfindung kann vorgesehen sein, dass zum Ansteuern der axialen Bewegung der Schiebemuffe bzw. des Nabenelementes eine Rastiereinrichtung vorgesehen ist. Die Rastiereinrichtung kann z. B. eine Feder-Kugel-Einheit oder dergleichen sein. Dabei kann vorgesehen sein, dass das Nabenelement in radialer Richtung eine Bohrung aufweist, in der die federbelastete Kugel der Feder-Kugel-Einheit geführt ist. Die Kugel wird durch die Feder in eine in der Schiebemuffe vorgesehene Nut gedrückt. Durch den in axialer Richtung wirkenden Betätigungsdruck kann die Schiebemuffe in axialer Richtung bewegt werden. In Abhängigkeit der Höhe des Betätigungsdruckes gibt die Rastiereinrichtung bei einem vorbestimmten Betätigungsdruck Pₛ die Schiebemuffe frei, sodass diese dann bei Vorliegen gleicher Drehzahlen zwischen dem Losrad und der Welle mit dem Losrad in Eingriff bringbar ist. Es ist auch möglich, dass andere mechanisch oder dergleichen betätigbare Rastiereinrichtungen bei der erfindungsgemäßen Getriebeschaltung verwendet werden.

Bevorzugt wird die hydraulische Betätigung der Schiebemuffe über einen Betätigungskolben oder dergleichen vorgesehen. Dieser kann z. B. über eine Ölversorgung mit Druck beaufschlagt werden, sodass die Schiebemuffe entsprechend axial verschiebbar ist. Es ist auch denkbar, dass andere Betätigungsarten für die Schiebemuffe vorgesehen werden.

Gemäß einer Weiterbildung der vorliegenden Erfindung kann zur Drehzahlangleichung zwischen dem zu schaltenden Losrad und der Welle zumindest eine bevorzugt als Bremslamelle ausgebildete Scheibe vorgesehen sein. Jede Bremslamelle weist entsprechende Reibeflächen auf, welche bevorzugt mit einem geeigneten Material beschichtet sind, um die Drehzahlangleichung auf einfachste Weise zu ermöglichen.

Die Erfindung wird im folgenden anhand der beigefügten Figuren näher erläutert.
Es zeigen:
- Fig. 1: eine geschnitte Teilansicht einer möglichen Ausgestaltung einer erfindungsgemäßen Getriebeschaltung;
- Fig. 2: ein möglicher Verlauf des Betätigungsdruckes bei dem Synchronisierungsvorgang und
- Fig. 3: eine geschnitte Teilansicht einer weiteren Ausgestaltung der erfindungsgemäßen Getriebeschaltung.

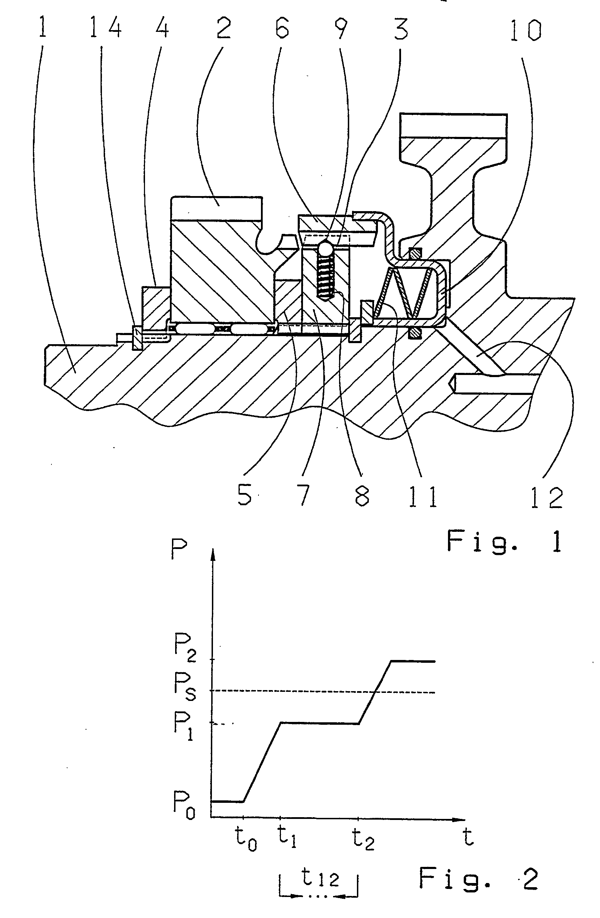

In Fig. 1 ist eine mögliche Ausgestaltung der erfindungsgemäßen Getriebeschaltung dargestellt. Die Getriebeschaltung weist eine Synchronisiereinrichtung für Losräder 2 auf. Dabei ist zumindest eine mit einem zu schaltenden Losrad 2 in Eingriff bringbare Schiebemuffe 6 vorgesehen. Die Schiebemuffe 6 ist drehfest und axial verschiebbar auf einer Welle 1 angeordnet, wobei die Schiebemuffe 6 mittels eines Betätigungskolbens 10 hydraulisch betätigbar ist. Das Losrad 2 ist drehbar auf der Welle 1 gelagert und steht mit weiteren Drehmoment übertragenden Elementen in Eingriff.

Erfindungsgemäß ist vorgesehen, dass die Schiebemuffe 6 über ein Nabenelement 7 mit der Welle 1 verbunden ist, wobei in Abhängigkeit des hydraulischen Betätigungsdruckes eine vorliegende Drehzahldifferenz zwischen dem zu schaltenden Losrad 2 und der Welle 1 ausgeglichen wird. Danach werden die Welle1 und das zu schaltende Losrad 2 drehmomentübertragend verbunden. Auf diese Weise wird der Synchronisierungsvorgang mit geringstem konstruktiven Aufwand und möglichst schnell realisiert.

Zur Drehzahlangleichung während des Synchronisiervorganges wird das zu schaltende Losrad 2 zwischen zwei Scheibenelementen 4, 5 eingeklemmt. Die beiden Scheibenelemente 4, 5 sind über Profile drehfest mit der Welle 1 verbunden, wobei die Scheibenelemente 4, 5 jeweils an den dem Losrad 2 zugewandten Seiten eine Reibfläche aufweisen, welche jeweils geeignet beschichtet ist. Die zum Synchronisieren erforderliche Klemmkraft wird hydraulisch durch den Betätigungskolben 10 auf die Schiebemuffe 6 aufgebracht. Der Betätigungskolben 10 wird über eine Rückstellefeder 11 nach der Synchronisierung wieder in seine Ausgangslage zurückgebracht.

Zum Ansteuern der axialen Bewegung der Schiebemuffe 6 ist eine geeignete Rastiereinrichtung an dem Nabenelement 7 vorgesehen. Die Rastiereinrichtung weist in der hier vorgestellten Ausgestaltung eine sogenannte Feder-Kugel-Einheit auf, welche in einer Bohrung des Nabenelementes 7 vorgesehen ist. Eine Kugel 9 dieser Einheit wird durch ein Federelement 8 in eine Rastiernut der Schiebemuffe 6 gedrückt.

Die gewählte konstruktive Ausgestaltung der Nut 3 zusammen mit der Höhe der Federkraft bestimmt die erforderliche axiale Verschiebekraft, die auf die Schiebemuffe 6 wirken muss, bevor sich diese aus der Ausgangslage heraus bewegen kann.

Wenn diese Kraft geringer als die Entriegelungskraft ist, bleibt die Schiebemuffe 6 in ihrer Lage gesperrt. Allerdings kann diese Kraft dazu verwendet werden, dass eine geeignete Klemmkraft auf die Scheibenelemente 4, 5 wirkt. Auf diese Weise werden die Scheibenelemente 4, 5 gegen das zu schaltende Losrad 2 gepresst, sodass die Drehzahldifferenz zwischen dem Losrad 2 und der Welle 1 ausgeglichen wird. Vorzugsweise weist zumindest das Scheibenelement 4 in axialer Richtung ein Anschlagelement 14 auf.

Die Kugel 9 und die Feder 8 sind in einer Bohrung in dem Nabenelement 7 geführt, welches in axialer Richtung lose auf der Welle 1 verschiebbar vorgesehen ist. Das Nabenelement 7 liegt direkt an dem Scheibenelement 5 an. Das Scheibenelement 5 ist wie auch das Nabenelement 7, über ein Profil mit der Welle 1 verbunden, um das erforderliche Drehmoment im geschalteten Zustand von der Schiebemuffe 6 auf die Welle 1 zu übertragen.

Sobald die durch den Betätigungsdruck auf die Schiebemuffe 6 wirkende Kraft die Entriegelungskraft übersteigt, kann die Kugel 9 aus der Nut 3 in die Bohrung entgegen der Federkraft des Federelements 8 gedrückt werden, sodass sich die Schiebemuffe 6 axial verschiebt und mit dem Losrad 2 in Eingriff bringbar ist. Wenn die Kugel 9 sich außerhalb der Rastiernut 3 befindet, wird auch die Klemmkraft auf das Losrad 2 auf Null reduziert. Dadurch kann das entsprechende Einfädeln der beiden Verzahnungen des Losrades 2 und der Schiebemuffe 6 in vorteilhafter Weise erleichtert werden.

Beim Lösen der Verbindung kann die Schiebemuffe 6 in die entgegengesetzte Richtung durch die Rückstellfeder 11 des Betätigungskolbens 10 gezogen werden. Dabei kann die Kugel 9 in die Rastiernut 3 der Schiebemuffe 6 gelangen und auf diese Weise wird das Nabenelement 7 von dem Scheibenelement 5 entfernt. Demzufolge kann eine vollständige Aufhebung der Klemmkraft beim Losrad 2 realisiert werden.

Demzufolge ist bei der erfindungsgemäßen Getriebeschaltung keine zusätzliche mechanische Sperreinrichtung erforderlich. Der bei der Getriebeschaltung vorgesehene Synchronisiervorgang wird im wesentlichen durch die Druckbeaufschlagung am Betätigungskolben 10 realisiert. Der Betätigungsdruck kann vorzugsweise, wie in Fig. 2 gezeigt, in zwei Stufen eingestellt werden. Im ungeschalteten Zustand kann der Betätigungsdruck bei dem Druck P₀ zum Zeitpunkt t₀ liegen. Der Druck P₀ ist derart gering, dass keine Kraft gegen die Rückstellfeder 11 des Betätigungskolben 10 wirkt.

Bei beginnendem Schaltvorgang wird der Betätigungsdruck auf eine erste Stufe nämlich auf den Druck P₁ erhöht. Durch den Druck P₁ wird erreicht, dass der Betätigungskolben 10 entgegen der Federkraft der Rückstellfeder 11 bewegt werden kann, wobei die überschüssige Kraft am Betätigungskolben 10 dann axial auf die Schiebemuffe 6 übertragen wird. Der Betätigungsdruck P₁ ist jedoch nicht in der Lage, eine ausreichende Kraft auf die Schiebemuffe 6 auszuüben, um diese entgegen der Rastiereinrichtung zu verschieben.

Auf diese Weise wird über die Kugel 9 und das Nabenelement 7 auf das Scheibenelement 5 diese Kraft übertragen. Solange der Betätigungsdruck P₁ anliegt, wirkt eine entsprechende Klemmkraft auf das Losrad 2 und die bestehende Drehzahldifferenz zwischen dem Losrad 2 und der Welle 1 wird ausgeglichen. Dabei ist die zeit, in der der Betätigungsdruck P₁ anliegt, die entsprechende Synchronisierzeit, welche durch das Zeitintervall t_{1,2} in Fig. 2 angegeben ist. Dabei ist zu beachten, dass diese Zeit ausreichend groß ist, um eine geeignete Drehzahlangleichung zu ermöglichen. Dies kann beispielsweise durch Messen der jeweiligen Drehzahl der Welle 1 und des Losrades 2 erfolgen, wobei dann die Synchronisierzeit t_{1,2} ermittelt wird. Es ist auch möglich, dass die Synchronisierzeit bekannt ist, da die Zustände sämtlicher sich drehender Teile im Getriebe bekannt sind und die jeweils erforderliche Zeit zur Synchronisierung ermittelt werden kann.

Wenn die Drehzahlangleichung erfolgt ist, kann der Betätigungsdruck auf die zweite Stufe nämlich auf den Druck P₂ angehoben werden. Dabei ist der Betätigungsdruck P₂ derart groß, um die Entriegelungskräfte bei der Rastiereinrichtung zu überwinden. Auf diese Weise wird die Schiebemuffe 6 derart axial verschoben, dass sie mit dem Losrad 2 in Eingriff bringbar ist. Dabei ist darauf zu achten, dass der in Fig. 2 gekennzeichnete Betätigungsdruck Pₛ der dazugehörige Druck ist, bei welchem die Entriegelung stattfindet. Der Betätigungsdruck Pₛ zwischen dabei bei den Betätigungsdrücken P₁ und P₂. Der betragsmäßige Abstand von Pₛ zu P₁ als auch der betragsmäßige Abstand von Pₛ zu P₂ muss jeweils derart groß sein, dass sämtliche Systemtoleranzen des Getriebes berücksichtigt werden.

Der in Fig. 2 dargestellte Druckverlauf ist lediglich beispielhaft angegeben, sodass auch andere beliebige Betätigungsdruckverläufe bei der erfindungsgemäßen Getriebeschaltung möglich sind.

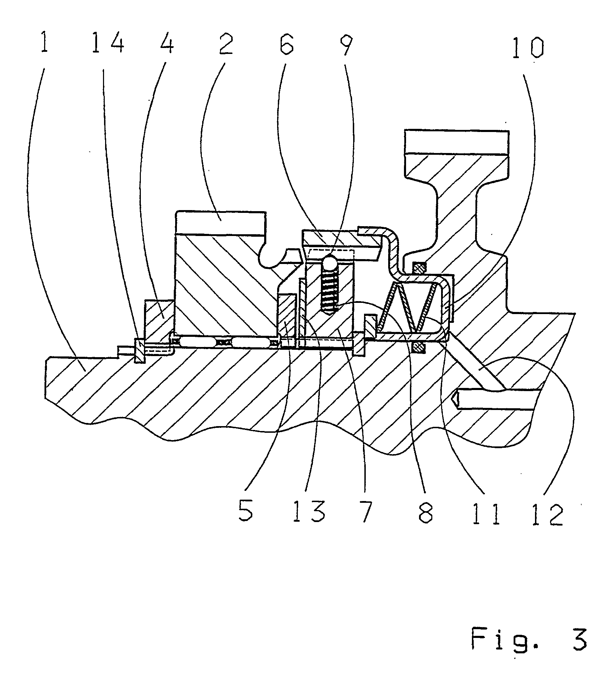

In Fig. 3 ist eine weitere mögliche Ausgestaltung der Getriebeschaltung gemäß der vorliegenden Erfindung dargestellt, wobei gleiche Bauteile mit gleichen Bezugszahlen wie in Fig. 1 bezeichnet sind.

Diese Ausgestaltung kann bevorzugt eingesetzt werden, wenn zum Angleichen der Drehzahldifferenz zwischen dem Losrad 2 und der Welle 1 ein höheres Moment erforderlich ist. Dies wird dadurch erreicht, dass eine weitere Bremslamelle 13 in axialer Richtung zwischen dem Nabenelement 7 und dem Scheibenelement 5 vorgesehen ist. Dadurch werden zusätzliche Reibflächen zur Verfügung gestellt, wodurch ein höheres Bremsmoment auf das zu schaltende Losrad 2 aufgebracht werden kann. Bevorzugt kann die Bremslamelle 13 eine Außenverzahnung aufweisen, die in die selbe Verzahung eingreift, in die auch die Verzahung der Schiebemuffe 6 eingreift. In vorteilhafter Weise verdoppelt sich auf diese Weise auch das nutzbare Synchronisierungsmoment.

### Bezugszeichen

- 1: Welle
- 2: Losrad
- 3: Rastiernut
- 4: Scheibenelement
- 5: Scheibenelement
- 6: Schiebemuffe
- 7: Nabenelement
- 8: Federelement
- 9: Kugel
- 10: Betätigungskolben
- 11: Rückstellfeder
- 12: Ölzuführung
- 13: Bremslamelle
- 14: Anschlagelement

## Patentansprüche

1. Getriebeschaltung mit einer Synchronisiereinrichtung für Losräder (2), welche zumindest eine mit einem ausgewählten Losrad in Eingriff bringbare Schiebemuffe aufweist, die drehfest und axial verschiebbar auf einer Welle angeordnet ist, wobei eine hydraulische Betätigung vorgesehen ist, wobei jede Schiebemuffe (6) über ein Nabenelement (7) mit der Welle (1) verbunden ist, wobei in Abhängigkeit des hydraulischen Betätigungsdruckes die Synchronisierung realisierbar ist, wobei in einem ungeschalteten Zustand der Bestätigungsdruck bei einem Druck (P₀) liegt, bei dem keine axiale Bewegung der Schiebemuffe (6) möglich ist, und wobei der Betätigungsdruck zur Entriegelung der Schiebemuffe (6) auf einen Druck (Pₛ) erhöht wird, bei welchem die Schiebemuffe (6) derart axial verschiebbar ist, dass die Schiebemuffe (6) und das Losrad (2) in Eingriff bringbar sind, **dadurch gekennzeichnet, dass** zur Drehzahlangleichung der Betätigungsdruck auf einen Druck (P₁) erhöht wird, welcher höher als der Betätigungsdruck (P₀) im ungeschalteten Zustand und niedriger als der Betätigungsdruck zur Entriegelung (Pₛ) ist, wobei bei diesem Betätigungsdruck (P₁) eine geringfügige axiale Verschiebung der Schiebemuffe (6) zur Drehzahtangleichung möglich ist.

2. Getriebeschaltung nach Anspruch 1, **dadurch gekennzeichnet, dass** eine Zeitdauer bei welcher der Betätigungsdruck (P₁)zur Drehzahlangleichung, auf die hydraulische Betätigung wirkt, durch mittelbares oder unmittelbares Messen der Drehzahl des Losrades (2) und der Welle (1) ermittelt wird.

3. Getriebeschaltung nach Anspruch 1, **dadurch gekennzeichnet, dass** das Nabenelement (7) eine Rastiereinrichtung aufweist, welche eine axiale Bewegung der Schiebemuffe (6) bei einem vorbestimmten Betätigungsdruck (Pₛ) ermöglicht.

4. Getriebeschaltung nach Anspruch 3, **dadurch gekennzeichnet, dass** die Rastiereinrichtung eine Kugel-Feder-Einheit aufweist, welche eine in einer Bohrung in dem Nabenelement (7) geführte Kugel (9) umfasst, die durch die Federkraft eines Federelements (9) in eine Rastiernut (3) der Schiebemuffe (6) führbar ist, sodass die Schiebemuffe (6) in axialer Richtung blockiert ist.

5. Getriebeschaltung nach einem der vorhergehenden Ansprüche, **dadurch gekennzeichnet, dass** das zu schaltende Losrad (2) zur Drehzahtangleichung zwischen zwei Scheibenelementen (4, 5) reibschlüssig angeordnet ist, wobei die erforderliche Klemmkraft für die Scheibenelemente (4, 5) durch den an der Schiebemuffe (6) anliegenden Betätigungsdruck aufbringbar ist.

6. Getriebeschaltung nach einem der vorhergehenden Ansprüche, **dadurch gekennzeichnet, dass** zur hydraulischen Betätigung der Schiebemuffe (6) ein Betätigungskolben (10) vorgesehen ist, welcher mit einer Ölversorgung (12) verbunden ist.

7. Getriebeschaltung nach Anspruch 6, **dadurch gekennzeichnet, dass** der Betätigungskolben (10) mittels einer Rückstellfeder (11) in seine Ausgangslage bringbar ist.

8. Getriebeschaltung nach einem der vorhergehenden Ansprüche, **dadurch gekennzeichnet, dass** zur Drehzahlangleich eine zusätzliche Bremslamelle (13) vorgesehen ist.

9. Getriebeschaltung nach Anspruch 8, **dadurch gekennzeichnet, dass** die zusätzliche Bremslamelle (13) zwischen dem Scheibenelement (5) und dem Nabenelement (7) drehfest an der Welle (1) vorgesehen ist.

10. Getriebeschaltung nach einem der vorhergehenden Ansprüche, **dadurch gekennzeichnet, dass** die jeweiligen Reibflächen der Scheibenelemente (4, 5) und der Bremslamelle (13) mit einem geeigneten Material beschichtet sind.

## Claims

1. Gear shift mechanism with a synchroniser device for loose wheels (2), having at least one sliding sleeve which can be moved into engagement with a selected loose wheel and which is mounted on a shaft so as to be rotationally fixed and axially displaceable, a hydraulic actuation system being provided, and each sliding sleeve (6) is connected to the shaft (1) via a hub element (7), the synchronisation being operated as a function of the hydraulic operating pressure, in which case the operating pressure is at a pressure (P₀) in a non-shifted state in which no axial displacement of the sliding sleeve (6) is possible and the operating pressure for releasing the sliding sleeve (6) is raised to a pressure (Pₛ) at which the sliding sleeve (6) can be axially displaced so that the sliding sleeve (6) and the loose wheel (2) can be moved into engagement, **characterised in that** in order to synchronise the speed, the operating pressure is raised to a pressure (P₁) which is higher than the operating pressure (P₀) in the non-shifted state and lower than the operating pressure needed for release (Pₛ), a slight axial displacement of the sliding sleeve (6) being possible at this operating pressure (P₁) in order to synchronise the speed.

2. Gear shift mechanism as claimed in claim 1, **characterised in that** a time interval during which the operating pressure (P₁) acts on the hydraulic operating system in order to synchronise the speed is determined by indirectly or directly measuring the speed of the loose wheel (2) and the shaft (1).

3. Gear shift mechanism as claimed in claim 1, **characterised in that** the hub element (7) has a latch mechanism which permits an axial displacement of the sliding sleeve (6) at a pre-defined operating pressure (Pₛ).

4. Gear shift mechanism as claimed in claim 3, **characterised in that** the latch mechanism device has a ball bearing-spring unit comprising a ball bearing (9) guided in a bore in the hub element (7) which can be guided by the spring force of a spring element (9) into a latching groove (3) of the sliding sleeve (6) so that the sliding sleeve (6) is blocked in the axial direction.

5. Gear shift mechanism as claimed in one of the preceding claims, **characterised in that** the loose wheel (2) to be shifted is disposed in a friction-fit arrangement between two disc elements (4, 5) for the purpose of synchronising speed and the clamping force needed for the disc elements (4, 5) can by applied by means of the operating pressure applied to the sliding sleeve (6).

6. Gear shift mechanism as claimed in one of the preceding claims, **characterised in that** an actuator piston (10) connected to an oil supply (12) is provided as a means of hydraulically actuating the sliding sleeve (6).

7. Gear shift mechanism as claimed in claim 6, **characterised in that** the actuator piston (10) can be returned to its initial position by means of a return spring (11).

8. Gear shift mechanism as claimed in one of the preceding claims, **characterised in that** an additional brake disc (13) is provided for speed synchronisation purposes.

9. Gear shift mechanism as claimed in claim 8, **characterised in that** the additional brake disc (13) is mounted on the shaft (1) in a rotationally fixed arrangement between the disc element (5) and the hub element (7).

10. Gear shift mechanism as claimed in one of the preceding claims, **characterised in that** the respective friction surfaces of the disc elements (4, 5) and the brake disc (13) are coated with an appropriate material.

## Revendications

1. Boîte de vitesses avec un dispositif de synchronisation pour des roues libres (2), qui comprend au moins un baladeur, pouvant être amené en engrènement avec une roue libre sélectionnée, disposé de manière solidaire en rotation et axialement sur un arbre, un actionnement hydraulique étant prévu, chaque baladeur (6) étant relié à l'arbre (1) par l'intermédiaire d'un élément de moyeu (7), dans laquelle la synchronisation est effectuée en fonction de la pression d'actionnement hydraulique, la pression d'actionnement s'élevant, dans l'état non enclenché, à une pression (P₀) à laquelle aucun mouvement axial du baladeur (6) n'est possible et dans laquelle la pression d'actionnement pour le déverrouillage du baladeur (6) est augmentée à une pression (Pₛ) à laquelle le baladeur (6) peut être déplacé axialement de façon à ce que ce baladeur (6) et la roue libre (2) puissent être mis en engrènement, **caractérisée en ce que**, pour l'égalisation des vitesses de rotation, la pression d'actionnement est augmentée à une pression (P₁) qui est supérieure à la pression d'actionnement (P₀) dans l'état non enclenché et inférieure à la pression d'actionnement (Pₛ) pour le déverrouillage, un faible déplacement axial du baladeur (6) étant possible à cette pression d'actionnement (P₁).

2. Boîte de vitesses selon la revendication 1, **caractérisée en ce qu'**un laps de temps pendant lequel la pression d'actionnement (P₁) agit sur l'actionnement hydraulique pour l'égalisation des vitesses de rotation est déterminé par une mesure directe de la vitesse de rotation de la roue libre (2) et de l'arbre (1).

3. Boîte de vitesses selon la revendication 1, **caractérisée en ce que** l'élément de moyeu (7) comprend un dispositif d'encliquetage qui permet un mouvement axial du baladeur (6) à une pression d'actionnement (Pₛ) prédéterminée.

4. Boîte de vitesses selon la revendication 3, **caractérisée en ce que** le dispositif d'encliquetage comprend une unité bille-ressort constituée d'une bille (9) guidée dans un alésage de l'élément de moyeu (7) et qui peut être guidée par la force d'un ressort (8) dans une rainure d'encliquetage (3) du baladeur (6), de façon à ce que le baladeur (6) soit bloqué en direction axiale.

5. Boîte de vitesses selon l'une des revendications précédentes, **caractérisée en ce que** la roue libre (2) à enclencher est disposée entre deux disques (4, 5) avec des frottements, la force de blocage nécessaire pour les disques (4, 5) pouvant être exercée grâce à la pression d'actionnement exercée au niveau du baladeur (6).

6. Boîte de vitesses selon l'une des revendications précédentes, **caractérisée en ce que**, pour l'actionnement hydraulique du baladeur (6), un piston d'actionnement (10) est prévu, qui est relié à une alimentation d'huile (12).

7. Boîte de vitesses selon la revendication 6, **caractérisée en ce que** le piston d'actionnement (10) peut être ramené dans sa position initiale à l'aide d'un ressort de rappel (11).

8. Boîte de vitesses selon l'une des revendications précédentes, **caractérisée en ce que**, pour l'égalisation des vitesses de rotation, un disque de freinage supplémentaire (13) est prévu.

9. Boîte de vitesses selon la revendication 8, **caractérisée en ce que** le disque de freinage supplémentaire (13) est disposé de manière solidaire en rotation sur l'arbre (1) entre le disque (5) et l'élément de moyeu (7).

10. Boîte de vitesses selon l'une des revendications précédentes, **caractérisée en ce que** les surfaces de frottement des disques (4, 5) et du disque de freinage (13) sont revêtues d'un matériau approprié.
